Europäisches Patentamt

European Patent Office

Office européen des brevets

(19)

(11) Veröffentlichungsnummer: **0 425 439 B1**

(12) **EUROPÄISCHE PATENTSCHRIFT**

(45) Veröffentlichungstag der Patentschrift: **02.08.95**

(51) Int. Cl.6: **C09D 11/00**

(21) Anmeldenummer: **90810797.2**

(22) Anmeldetag: **17.10.90**

(54) **Wässerige Drucktinten für den Tintenstrahldruck.**

(30) Priorität: **26.10.89 CH 3868/89**

(43) Veröffentlichungstag der Anmeldung:
**02.05.91 Patentblatt 91/18**

(45) Bekanntmachung des Hinweises auf die
Patenterteilung:
**02.08.95 Patentblatt 95/31**

(84) Benannte Vertragsstaaten:
**CH DE FR GB IT LI**

(56) Entgegenhaltungen:
**EP-A- 0 376 284
EP-A- 0 441 987
GB-A- 2 148 316**

(73) Patentinhaber: **CIBA-GEIGY AG
Klybeckstrasse 141
CH-4002 Basel (CH)**

(72) Erfinder: **Hauser, Hanspeter
Drosselweg 22
CH-4147 Aesch (CH)**
Erfinder: **Reiniger, Karin
Hauptstrasse 22
CH-4147 Aesch (CH)**

## Beschreibung

Die vorliegende Erfindung betrifft wässrige Drucktinten für den Tintenstrahldruck.

Wässrige Tinten für den Tintenstrahldruck sind bekannt und in mehreren Druckschriften beschrieben. Derartige Tinten enthalten im wesentlichen einen wasserlöslichen organischen Farbstoff in Form eines Salzes, einen Polyalkohol oder dessen Ether als Benetzungsmittel, gegebenenfalls noch einen geringen Bindemittelanteil, und Wasser. Beispiele hierfür sind z.B. in der deutschen Patentschrift Nr. 3711052, in der europäischen Patentschrift Nr. 0194885 oder in der japanischen Offenlegungsschrift Nr. 63-256668 beschrieben. Auch die Verwendung von Pigmenten als Farbmittel, insbesondere von Russ, wurde bereits vorgeschlagen, wobei in diesem Fall ein meist polymeres Dispergierungsmittel und ein Bindemittel mitverwendet werden. Beispiele hierfür sind in der japanischen Offenlegungsschriften No. 56-147861, Nr. 60-152575 und Nr. 61-235478 beschrieben. Ferner sind in der deutschen Patentschrift Nr. 2729892 feste Pigmentpräparate auf Basis eines sauren Polyacrylharzes beschrieben, wobei diese Präparate nicht für den Tintenstrahldruck, sondern als Druckfarben in Druck- und Lackierungssystemen nach konventionellen Verfahren, wie Tief-, Flexo-, Sieb-, Buch- oder Offsetdruck oder durch Coating, Spritzen, Streichen und Rakeln, verwendet werden.

Drucktinten für Tintenstrahldrucker erfordern insbesondere optimale anwendungstechnische Eigenschaften der Tinte, wie Viskosität, Stabilität, Trocknungsverhalten und Oberflächenspannung, so dass z.B. bei längerem Unterbruch des Druckes kein Niederschlag gebildet wird und die Düse des Tintenstrahldruckers nach längerem Stehenlassen (bzw. Nicht-Gebrauch) durch die Drucktinte nicht verstopft wird (oft DOD-Eigenschaft genannt, d.h. Drop on Demand). Ausserdem wird in vielen Anwendungsgebieten oft eine einwandfreie Wasserbeständigkeit verlangt, was mit den wasserlöslichen organischen Farbstoffen, die in den obigen Schriften beschrieben sind, nicht erreicht werden kann.

Es wurde nun gefunden, dass sich wässrige Drucktinten auf Basis von Pigmenten und sauren Polyacrylharzen ausgezeichnet für den Tintenstrahldruck eignen und einwandfreie Eigenschaften, wie DOD-Eigenschaft, Viskosität, Schriftauflösung und hohe Wasser- und Migrationsbeständigkeit, besitzen.

Gegenstand der Erfindung ist demnach eine wässrige Drucktinte für den Tintenstrahldruck enthaltend

a) 0,5 bis 5 Gew.-% eines festen Pigmentpräparates enthaltend 30 bis 70 Gew.-% eines Pigmentes und 70 bis 30 Gew.-% eines carbonsäuregruppenhaltigen Polyacrylharzes mit einer Säurezahl zwischen 50 und 300 und einem Durchschnittsmolekulargewicht Mw zwischen 30'000 und 60'000,

b) 2 bis 10 Gew.-% eines wasserverdünnbaren organischen Lösungsmittels ausgewählt aus der Gruppe der $C_1$-$C_4$-Alkohole, aliphatische Ketone, Polyole, Cellosolve, Carbitole, N-Methyl-2-pyrrolidon, 2-Pyrrolidon, N,N-Dimethylformamid, N,N-Dimethylacetamid und deren Gemische,

c) 2 bis 15 Gew.-% eines Trockungsverzögerers ausgewählt aus der Gruppe Ethylenglykol, Diethylenglykol, Triethylenglykol, Tetraethylenglykol, Propylenglykol, Dipropylenglykol, Glycerin unde insbesondere Polyethylenglykole, und

d) Wasser,

wobei die wässrige Drucktinte eine Viskosität zwischen 2 und 5 mPas aufweist.

Als carbonsäuregruppenhaltige Polyacrylharze werden insbesondere solche verwendet, die durch Polymerisation von Acrylsäure oder von Acrylsäure und anderen Acrylmonomeren, wie z.B. Acrylsäureestern, erhalten werden. Es können aber auch andere Polyacrylverbindungen, wie polymere Methacryl- oder Crotonsäuren oder ähnliche polymere Carbonsäuren, verwendet werden, wenn sie eine grössere Anzahl von Carbonsäuregruppen als Substituenten aufweisen. Wichtig ist vor allem, dass das zu verwendende Polyacrylharz in wässrigem oder wasserverdünnbare organische Lösungsmittel enthaltendem wässrigem Medium, gegebenenfalls unter Zusatz von Basen, löslich ist. Solche Harze sind im Handel in saurer oder in teilweise oder vollständig neutralisierter Form erhältlich, z.B. ®Aquahyde-, ®Surcol-, ®Elvacit-, ®Zinpol-, ®Neocryl, ®Carboset- oder ®Joncryl-Harze.

Bevorzugte Acrylharze sind Produkte, die im wesentlichen aus den drei Bauelementen Ethylacrylat, Methylmethacrylat und Acrylsäure oder Methacrylsäure bestehen.Auch Butylacrylat, Ethylmethacrylat und Butylmethacrylat können verwendet werden.

Die Säurezahl des zu verwendenden Polyacrylharzes beträgt 50 bis 300, bevorzugt 60 bis 120, und das Harz hat ein Durchschnittsmolekulargewicht Mw zwischen 30000 und 60000 (Bestimmung z.B. durch Lichtstreuung).

Das erfindungsgemäss zu verwendende feste Pigmentpräparat enthält 30 bis 70 Gew.-% Pigment und 70 bis 30 Gew.-% carbonsäuregruppenhaltiges Polyacrylharz, bevorzugt aber 50 bis 60 Gew.-% Pigment.

Zur Herstellung der festen Pigmentpräparate können sowohl anorganische Pigmente, beispielsweise Russ, Titandioxyd oder Eisenoxyde, als auch organische Pigmente, insbesondere solche der Phthalocyanin-, Anthrachinon-, Perinon-, Indigoid-, Thioindigoid-, Dioxazin-, Diketopyrrolopyrrol-, Isoindolinon-, Perylen-, Azo-, Chinacridon- und Metallkomplexreihe, beispielsweise Metallkomplexe von Azo-, Azomethin- oder Methinfarbstoffen, sowie Klassische Azofarbstoffe der β-Oxynaphthoesäure- und Acetoacetarylidreihe, oder Metallsalze von Azofarbstoffen, eingesetzt werden, wobei gegebenenfalls auf ihre Alkalibeständigkeit zu achten ist. Es können auch Gemische verschiedener organischer Pigmente oder Gemische eines anorganischen Pigments mit einem organischen Pigment verwendet werden.

Besonders geeignet sind Russpräparate oder Präparate mit organischen Pigmenten, enthaltend bevorzugt 50-60 Gew.-% Russ oder eines organischen Pigmentes und 40-50 Gew.-% Polyacrylharz.

Ausser den erfindungsgemäss zu verwendenden Komponenten können die Pigmentpräparate noch Hilfsmittel, wie z.B. Stabilisierungs- und Füllstoffe, enthalten.

Die Herstellung der Pigmentpräparate kann auf verschiedene Weise erfolgen, beispielsweise durch Zugabe des Pigments zu einer alkalischen Polyacrylharz-Lösung mit anschliessendem Ausfällen des Harzes durch Ansäuern, durch Sprühzerstäubung der Pigment-Harz-Lösung, oder vorzugsweise kontinuierlich oder diskontinuierlich in Knetmaschinen durch Vermischen eines wasserunlöslichen sauren Harzes mit dem Pigment. Bei der Herstellung des Pigmentpräparats nach dem zuerst genannten Verfahren können auch Alkalien verwendet werden, die anschliessend neutralisiert werden. Bei der Herstellung in Knetmaschinen kann das Polyacrylharz aus wässrig-ammoniakalischer Lösung direkt im Kneter durch Ansäuern gefällt, das ausgeschiedene Wasser von der Trägerharzschmelze abgegossen, Pigment, Lösungsmittel und gegebenenfalls Natriumchlorid als Mahlhilfskörper zugegeben, bis zur gewünschten Feinheit des Pigmentes geknetet und die Masse zum trockenen Präparat aufgearbeitet werden.

Ausgezeichnet eignen sich feste Pigmentpräparate, die in Knetmaschinen hergestellt werden und vorzugsweise einen Pigmentgehalt von 50 bis 60 Gew.-% haben, insbesondere aber auf Basis von Russ feiner Qualität, wie er in konventionellen Druckfarben und -tinten verwendet wird.

Geeignete wasserverdünnbare organische Lösungsmitteln sind aliphatische $C_1$-$C_4$-Alkohole, wie Methanol, Ethanol, n-Propanol, Isopropanol, n-Butanol, Isobutanol oder tert.-Butanol, aliphatische Ketone, wie z.B. Aceton, Methyl-Ethylketon, Methyl-Isobutylketon oder Diacetonalkohol, ferner Polyole, Cellosolve und Carbitole, wie Ethylenglykol, Diethylenglykol, Triethylenglykol, Glycerin, Propylenglykol, Ethylenglykolmonomethyl- oder -monoethylether, Propylenglykolmethylether, Dipropylenglykolmethylether, Tripropylenglykolmethylether, Ethylenglykolphenylether, Propylenglykolphenylether, Diethylenglykolmonomethyl- oder -monoethylether, Diethylenglykolmonobutylether, Triethylenglykolmonomethyl- oder -monoethylether, ferner N-Methyl-2-pyrrolidon, 2-Pyrrolidon, Dimethylformamid und Dimethylacetamid. Ein bevorzugtes Lösungsmittel ist Isopropanol oder N-Methyl-2-pyrrolidon. Gemische der oben erwähnten Lösungmittel können auch verwendet werden.

Die Menge des organischen Lösungsmittels in der Drucktinte beträgt 2 bis 10 Gewichtsprozent.

Zur Verhinderung des Verstopfens der Düsen werden als Trocknungsverzögerer mehrwertige Alkohole ausgewählt aus der Gruppe Ethylenglykol, Diethylenglykol, Triethylenglykol, Tetraethylenglykol, Propylenglykol, Dipropylenglykol, Glycerin und insbesondere Polyethylenglykole, die bevorzugt ein Molekulargewicht zwischen 200 und 800 aufweisen, verwendet. Die Menge des mehrwertigen Alkohols in der wässrigen Drucktinte beträgt 2 bis 15 Gewichtsprozent.

Zweckmässig kann die wässrige Drucktinte noch eine Base enthalten, bevorzugt eine aliphatische Base, wie Ammoniak, Aminomethylpropanol, Dimethylaminomethylpropanol, Dimethylethanolamin, Diethanolamin, Triethanolamin, Morpholin, Piperazin oder Piperidin, oder Gemische davon, so dass sich die Base bei der Trocknung der Drucktinte verflüchtigt und der daraus gebildete Film wasserunlöslich wird. Bevorzugte Basen sind Ammoniak und/oder Aminomethylpropanol. Die Konzentration der Base wird so bemessen, dass die freien Carboxylgruppen des Acrylharzes als Aminsalz vorliegen.

Zweckmässig ist die Drucktinte neutral bis schwach alkalisch, und weist z.B. einen pH zwischen 7 und 11 auf.

Zur Einstellung der Viskosität und/oder der Oberflächenspannung und der Leitfähigkeit der Tinte innerhalb bestimmter Bereiche ist es ferner oft vorteilhaft, insbesondere bei kontinuierlichem Drucken, Zusätze bzw. geeignete Mittel zu verwenden. Für diese Zwecke sind irgendwelche bekannten, die Viskosität oder die Oberflächenspannung regulierenden Mittel anwendbar, solange von diesen Mitteln keine unerwünschten Auswirkungen auf die Tinten und das Aufzeichnungsmaterial ausgehen. Beispiele für solche, die Viskosität regulierende Mittel sind Polyvinylalkohol, Hydroxypropylcellulose, Carboxymethylcellulose, Hydroxyethylcellulose, Methylcellulose, wasserlösliche Acrylharze und Polyvinylpyrrolidon. Oberflächenspannung regulierende Mittel sind z.B. anionische und nicht-ionische oberflächenaktive Mittel, wie etwa Polyethylenglykolether-Sulfat, Estersalze und dgl. als anionische Verbindungen; ferner Polyoxyethylenalkylether, Polyoxyethylenalkylphenylether, Polyoxyethylenalkylester, Polyoxyethylensorbitanalkylester, Polyoxyethylenalkylamine und ähnliche Verbindungen als nicht-ionische Materialien.

Solche die Viskosität regulierende und die Oberflächenspannung regulierende Mittel können grundsätzlich zugesetzt werden, um in der Düse ein ausreichendes Strömungsverhalten bei einer der Aufzeichnungsgeschwindigkeit entsprechenden Geschwindigkeit zu erhalten, ferner um die Tropfenbildung des Aufzeichnungsmaterials (Tinte) an der Aussenfläche der Düse im Anschluss an die Abgabeöffnung und eine Verbreiterung des Tintenflekkes auf dem Aufzeichnungsträger zu verhindern. Die Leitfähigkeit liegt zweckmässig etwa in einem Bereich zwischen 1000 und 10'000 $\mu S/cm$. Beispiele von Ionen sind Lithium- oder quaternäre Ammoniumionen, wie z.B. aus Lithiumhydroxyd, Tetraethylammoniumacetat, Natriumnitrat oder Natriumcarbonat.

Zusätzlich zu den oben genannten Komponenten können den erfindungsgemässen Drucktinten je nach Anwendung z.B. noch Konservierungsmittel, Antischimmelmittel, Tenside, Lichtschutzmittel und pH-Regler zugesetzt werden. Als pH-Regler eignen sich z.B. Lithiumhydroxid oder -carbonat, quaternäres Ammoniumhydroxid und quaternäres Ammoniumcarbonat. Beispiele für Konservierungs- und Antischimmelmittel sind z.B. Natriumdehydroacetat, 2,2-Dimethyl-6-acetoxydioxan oder Ammoniumthioglykolat.

Die erfindungsgemässen Drucktinten lassen sich auf den verschiedensten Medien applizieren, z.B. auf Papier und beschichteten Papieren, wie Tapeten, Dekorpapiere und vor allem Verpackungspapiere, auf Metallen und Kunststoffen, wie z.B. Aluminium-, Weich- und Hart-PVC-, Polyamid- und Polystyrol-Folien, Celluloseacetatfilme, ferner Polyethylen-, Polypropylen- und Polyesterfilme, sowie vorbehandelte Filme davon (z.B. sogenannte "Corona-vorbehandelte" Filme), ferner auf Glas, Keramik, Zellglas und lackierten Zellglasqualitäten.

Erfindungsgemäss besonders vorteilhaft ist das Bedrucken von Verpackungen auf Papier- und Kunststoffbasis.

Zur Herstellung der erfindungsgemässen Drucktinten wird das Pigmentpräparat unter Rühren in Wasser oder in ein Wasser/Lösungsmittel-Gemisch oder in eine Acrylharz-Lösung eingearbeitet, wobei zur Dispergierung des Pigments kein zusätzlicher Anreibprozess notwendig ist. Das kann beispielsweise nach den folgenden Verfahren geschehen:

- Herstellung eines Farbkonzentrats in Wasser oder in einem Wasser-Lösungsmittelgemisch z.B. in Wasser, Wasser/Ethanol, Wasser/Isopropanol, Wasser/organischer Base, Wasser/organischer Base/Alkohol, oder in einer mit etwas Lösungsmittel verdünnten wässrigen Acrylharz-Lösung. Die zu wählende Pigmentpräparat-Konzentration richtet sich nach der gewünschten Viskosität des Konzentrats und ist u.a. vom Lösungsmittel abhängig. Bevorzugte Konzentrationen liegen bei ca. 5 bis 20 Gew.-% reinem organischem Pigment, im Falle anorganischer Pigmente etwas höher, z.B. 25-50 Gew.-%. Bevorzugt liegen die Alkohol-Anteile zwischen 10 und 30 Gew.% und die Mengen organischer Basen zwischen 0,5 und 3 Gew.%. Die so erhaltenen Konzentrate können dann gegebenenfalls mit weiteren Zusätzen im gewünschten Verhältnis weiter gemischt bzw. verdünnt werden.

- Direktes Einrühren in die Acrylharz-Lösung oder -Suspension, gegebenenfalls unter Zusatz von etwas Lösungs- oder Verdünnungsmittel oder anderen Zusätzen zur Einstellung der Viskosität und/oder der Oberflächenspannung. Auf diese Weise können direkt verbrauchs- oder lieferfähige Drucktinten hergestellt werden.

Ein bevorzugtes Verfahren zur Herstellung der erfindungsgemässen Drucktinten besteht darin, dass ein Pigmentpräparat enthaltend 50 bis 60 Gew.-% eines Pigments und 40 bis 50 Gew.-% eines Polyacrylharzes in Wasser oder in wässrigem Alkohol unter Zusatz von Ammoniak oder einem aliphatischen Amin, beispielsweise einem Mono-, Di- oder Trialkylamin, einem Alkanolamin oder einem heterocyclischen Amin, wie Morpholin oder Piperazin, in das gewünschte Acrylharz eingearbeitet wird, wobei das Harz gelöst und das Pigment im Applikationsmedium fein dispergiert wird.

Der pH-Wert des Tintenkonzentrates liegt bevorzugt zwischen 7,5 und 8,5, der pH-Wert der fertigen Drucktinte liegt dagegen zwischen 9,5 und 10,5. Falls nötig, z.B. um den Grobanteil der Dispersion zu entfernen, kann es vorteilhaft sein, die fertigen Drucktinten vor Gebrauch mit einem geeigneten Filter oder einer Kombination von Filtern klar zu filtrieren, z.B. mit einem 5 $\mu m$-Glasfilter (Whatman) oder 5 $\mu m$-Membranfilter (Sartorius) oder bevorzugt mit einer Kombination dieser beiden Filter.

Das Applizieren der Drucktinte auf dem Substrat, z.B. einem Blatt Papier, erfolgt nach an und für sich bekannten Verfahren mit einem handelsüblichen Tintenstrahldrucker, wie drop-on-demand printers, bubble-jet-printers oder continuous-jet-printers, z.B. mit einem Word Processor ® Ripat 5600 J (Firma Ricoh Co. Ltd.) oder einem Tintenstrahldrucker der Firma Numaco AG (CH) (enthaltend einen Epson-Druckkopf mit Piezoelementsteuerung). Der Druckkopf besteht in der Regel aus mehreren feinen Düsen, wobei jede Düse einen Durchmesser zwischen 10 und 60 $\mu m$ und verschiedene Formen aufweisen kann. Die Tintenstrahldrucker mit Piezoelementdüsen sind einzeldruckgesteuert, so dass die Spritzrichtung der Druckfarbe auf das Substrat gezielt appliziert bzw.

kontrolliert werden kann. Der Druckkopf des letztgenannten Tintenstrahldruckers enthält 28 feine Düsen.

Die erfindungsgemässen Drucktinten sowie die daraus erhaltenen Markierungen/Beschriftungen weisen ausgezeichnete Eigenschaften, wie einfache Formulierung der Drucktinten, einwandfreie Viskosität, Oberflächenspannung, Leitfähigkeit und Lagerung/Haltbarkeit der Tinten auf, und sie führen nicht zu Verstopfung der Düsen; ferner sind die Beschichtungen klar und gut lesbar und weisen eine einwandfreie Licht-, Wetter-, Wasser- und Migrationsbeständigkeit, sowie eine gute Benetzbarkeit nicht saugender Bedruckstoffe auf. Viskositätswerte zwischen 2 und 5 mPas lassen sich mit den erfindungsgemässen Drucktinten problemlos einstellen.

Ausserdem lassen sich Bilder/Beschriftungen mit feinster Schriftauflösung herstellen.

Die erfindungsgemässen Drucktinten können auch kleinere Anteile organischer für diese Anwendung geeigneter Farbstoffe enthalten, bevorzugt sind jedoch Drucktinten ohne Zusatz organischer Farbstoffe, weil damit Beschriftungen mit einwandfreier Wasser- und Alkalibeständigkeit erhalten werden können. Speziell für sehr feine Spritzdüsen gestatten kleine Anteile organischer Farbstoffe die Erhöhung der Farbintensität unter Beibehaltung einer tiefen Viskosität. Die Wasserbeständigkeit der Drucke wird aber dabei prozentual zur eingesetzten Farbstoffmenge herabgesetzt.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiele 1-3: Herstellung der Pigmentpräparate.

Beispiel 1: In einer 1l-Batchsandmühle wird eine Mischung von 100 g einer wässrig-isopropanolischen Lösung, welche 40 % eines Acrylharzes in Form des Ammoniumsalzes (®Zinpol 1519 der Zinchem Corp., mit der Säurezahl 93) enthält, 50 g Ethylalkohol, 150 g Wasser und 40 g des Ofenrusses PRINTEX®300 (Degussa) während 13 Stunden gemahlen.

Danach wird das Mahlgut mit 100 g Wasser verdünnt, vom Mahlhilfskörper abgetrennt und in dünnem Strahl in eine schwach salzsaure Lösung von 1000 g Wasser und 20 ml einer 15 %-igen Salzsäure eingetragen. Das Pigmentpräparat fällt grobkörnig aus. Dieses wird filtriert, säure- und salzfrei gewaschen, bei 60°-70°C im Vakuum getrocknet und anschliessend durch ein $\frac{1}{2}$ mm-Sieb gedrückt. Man erhält ein schwarzes Pigmentpräparat guter Qualität mit 50 % Pigmentgehalt.

Beispiel 2: In einem Labor-Kneter werden 90 g des Ofenrusses PRINTEX®300 (Degussa), 90 g eines sauren Acryl-Copolymers (®Aquahyde 100;

Säurezahl 74), 450 g feingemahlenes Natriumchlorid und 80 g Diacetonalkohol während 3 Stunden bei ca 60°C geknetet.

Die Zerlegung der Knetmasse geschieht durch Zugabe von 250 g einer gesättigten NaCl-Lösung. Die Zugabe von 100 g Eis zur erkalteten Masse vervollständigt die Granulierung. Anschliessend wird das Produkt filtriert, und der Rückstand wird mit Wasser lösungsmittel- und salzfrei gewaschen. Der Filterkuchen wird im Vakuumschrank bei 80°C getrocknet. Das Trockengut wird vorteilhaft durch ein Sieb von 0,5 mm Maschenweite gedrückt. Man erhält ein 50 %iges schwarzes Pigmentpräparat guter Qualität.

Beispiel 3: Verfährt man analog dem obigen Beispiel 2, verwendet aber anstelle des dort eingesetzten Acrylharzes das saure Acrylharz ®Carboset XL-27 (Säurezahl 74) in einem derartigen Mengenverhältnis, dass ein 60 %-iges Pigmentschwarzpräparat hergestellt wird, so wird ein Pigmentpräparat mit gleich guter Qualität erhalten.

Anwendungsbeispiele 4-6:

| Beispiel 4: | a) Herstellung eines Drucktintenkonzentrates: |
|---|---|
| Formulierung: | 25 Gew.-% des Schwarzpräparates gemäss Beispiel 3, 52,5 Gew.-% Wasser, 20 Gew.-% Isopropanol, 1,5 Gew.-% Aminomethylpropanol und 1 Gew.-% 25 %iger Ammoniak. |
| Einarbeitung: | 40 g Wasser und 15 g Isopropanol werden in einem Glasbehälter vorgelegt, worauf 25 g des Pigmentpräparates, 1,5 g Aminomethylpropanol und 1 g Ammoniak eingerührt werden. Anschliessend wird die Suspension 30 Minuten mittels einem Dissolver bei 10'000 Umdrehungen pro Minute (entsprechend einer Umfangsgeschwindigkeit von 15 m/sec) dispergiert. Dann werden 12,5 g Wasser und 5 g Isopropanol unter normalem Rühren zugegeben. b) Herstellung der fertigen Drucktinte: 3,0 g des obigen Drucktintenkonzentrates (enthaltend 25 Gew.-% Pigmentpräparat) werden dann mit 85,8 g Wasser, 0,2 g Aminomethylpropanol, 2 g Polyethylenglykol |

(Mol. Gew. 600) und 9 g Isopropanol unter normalem Rühren verdünnt. Je nach gewünschter Leitfähikeit kann noch ein ionenbildendes Salz z.B. in Mengen von 0,3-1 g zugegeben werden.

Die so erhaltene Dispersion wird mit einer Kombination von zwei Filtern klar filtriert, um den Grobanteil der Dispersion zu entfernen [Whatman-5 $\mu$m-Glasfilter und Sartorius-5 $\mu$m-Membranfilter]. Die so erhaltene Drucktinte hat eine Viskosität von 3 bis 3,5 mPas (Haake-Viskosimeter, gemäss MB DIN-E-Programm; 250 m$^{-1}$). Die Grösse der Teilchen der Drucktinte hat einen D-84-Wert von 0,107 $\mu$m (gemäss Joyce-Loebel-Methode gemessen; dieser Wert bedeutet, dass 84 % der Partikel kleiner sind als 0,107 $\mu$m).

c) Beschriftung:

Die so erhaltene Drucktinte wird dann mit einem handelsüblichen Tintenstrahldrucker der Firma Numaco (Schweiz) [Epson-Druckkopf mit 28 Düsen, tunnelförmig; Basis der Düse 95 $\mu$m; Höhe der Düse 17$\mu$m] auf linearer Unterlage (Blatt Qualitätspapier, mit einem Deckstrich beschichtet und rückseitig mit Alu kaschiert) appliziert, wobei die folgenden Eigenschaften geprüft werden:

Visuelle Beurteilung der Klarheit der erhaltenen Bilder: die erhaltenen Bilder sind klar, scharf, haben einen guten Kontrast und sind gut lesbar. Dies gilt sowohl für die grossen Bilder (z.B. Buchstaben von 33 cm Höhe, 18 cm Breite und 3,5 cm Dicke) als auch für die Kleinen Bilder (z.B. Buchstaben mit einer Dicke von 0,1 mm bei einer Grösse von etwa 1,2 mm Breite und 1,0 mm Höhe).

Wasserbeständigkeit der Bilder: Die Bildprobe wird 1 Minute in 30 °C warmes Wasser getaucht und wieder entnommen, worauf die Bilddichte der eingetauchten Probe mit einem Macbeth-Densitometer gemessen wird. Aus der im Test bestimmten Anfangsbilddichte $d_0$ und dem Wert $d_2$ errechnet sich die Wasserbeständigkeit der Bilder nach folgender Formel:

$$\frac{d_0 - d_2}{d_0} \cdot 100 \ \%$$

Der erhaltene Wert beträgt 100 % und beweist daher, dass die mit der geprüften Drucktinte erhaltenen Bilder eine ausgezeichnete Wasserbeständigkeit besitzen.

Ausserdem zeichnen sich die erhaltenen Bilder durch eine einwandfreie Lichtbeständigkeit aus.

Beispiel 7: In einem Kneter werden 95 g des roten Disazopigmentes ®Cromophtal Rot 2B (C.I.Nr.221), 95 g eines sauren Acrylkopolymers ®Carboset XL 27 (Säurezahl 72-76, EP 106°C), 570 g feingemahlenes Natriumchlorid und 75 g Diacetonalkohol während 4 Stunden verknetet. Die Zerlegung der Knetmasse geschieht dann durch Zugabe von 250 g gesättigter Natriumchloridlösung, worauf die Granulierung durch Zugabe von 100 g Eis zur erkalteten Masse vervollständigt wird. Das erhaltene Granulat wird zur Feingranulierung mit ca. 5000 g Wasser einer Nassmahlung in einer Zahnkolloidmühle unterworfen. Anschliessend wird filtriert und mit Wasser lösungsmittel- und salzfrei gewaschen. Der Filterkuchen wird im Vakuumschrank bei 80°C getrocknet. Das Trockengut wird vorteilhaft durch ein Sieb von 0,5 mm Maschenweite gedrückt.Man erhält ein rotes Präparat mit 50% Pigmentgehalt.

Beispiel 8: Man verfährt analog Beispiel 7, aber unter Verwendung von 95 g des blauen beta-Kupferphtalocyaninpigments (Rohware). Man knetet die Knetmasse während 6 Stunden bei ca. 60°C. Man granuliert anschliessend wie in Beispiel 7 beschrieben und arbeitet analog auf wie im gleichen Beispiel 7. Man erhält ein blaues Präparat von 50% Pigmentgehalt.

Beispiele 9-10:

a) Herstellung des Drucktinten-Konzentrates

Formulierung: 30 Gew.% des Rot- bzw. Blaupräparats gemäss Bspl.7 bzw. 8, 52 Gew.% Wasser, 15 Gew.% Isopropanol, 1,5 Gew.% Aminomethylpropanol und 1,5 Gew.% 25%iger Ammoniak. Einarbeitung: 52 g Wasser und 15 g Isopropanol werden in einen Glasbehälter vorgelegt, worauf 30 g des obigen Rot- bzw. Blaupigmentpräparats, 1,5 g Aminomethylpropanol und 1,5 g Ammoniak eingerührt werden. Anschliessend wird die Suspension während 30 Minuten mittels einem Dissolver bei 10000 Umdrehungen pro Minuten (entsprechend einer Umfangsgeschwindigkeit von 15 m/s) dispergiert.

b) Herstellung der fertigen Drucktinte:

4,0 g des obigen Drucktintenkonzentrates gemäss Bspl. 9 bzw. 10 (enthaltend 30 Gew.% Pigmentpräparat) werden mit 87,8 g Wasser, 0,2 g Aminomethylpropanol, 4 g Polyethylenglykol (Mol.Gew. 600) und 4 g N-Methyl-2-pyrrolidon unter normalen Rühren verdünnt. Je nach gewünschter Leitfähigkeit kann noch ein ionenbildendes Salz z.B. in Mengen von 0,3 - 1 g zugegeben werden.Filtrierung wie bei obigen Anwendungsbeispielen 4-6;
Viskosität der erhaltenen Drucktinte: 4 - 5 mPa.s;
Teilchengrösse D-84 für die blaue Tinte : 0,247, und für die rote Tinte : 0,256.
Die Beschriftung mit den erhaltenen Tinten erfolgt gemäss den Beispielen 4-6,Teil C; diese Tinten zeichnen sich durch ausgezeichnete allgemeine Eigenschaften aus.

Die Aufzeichnungs- und Lagerungseigenschaften, wie der kontinuierliche Schreibtest und der Lagerungstest, können nach an und für sich bekannten Testmethoden geprüft werden, z.B. gemäss dem Beispiel 4 der deutschen Patentschrift Nr. 2927062.Die erfindungsgemässen Drucktinten weisen gute allgemeine Eigenschaften auf, und sind lagerungsbeständig.

Beispiel 11: Pigment-Farbstoff-Kombination;

Die Herstellung des Druchtintenkonzentrates und die Einarbeitung erfolgen wie beim obigen Beispiel 4.

Herstellung der fertigen Drucktinte:

Formulierung: 1 Gew.% des Schwarzpräparates gemäss Bspl.3, 6 Gew.% ®Irgaspers Schwarz RU (Acid Black C.I.Nr.52; 1,2-Chromkomplex), 84,8 Gew.% Wasser, 0,2 Gew.% Aminomethylpropanol, 4 Gew.% N-Methyl-2-pyrrolidon und 4 Gew.% Polyethylenglykol (Mol.Gew. 600).
Einarbeitung: 84,8 g Wasser, 0,2 g Aminomethylpropanol, 4 g N-Methyl-2-pyrrolidon und 4 g Polyethylenglykol (600) werden vorgelegt und mit einem Rührer vermischt.1 g des obigen Schwarzpräparates (enthaltend 25 Gew.% Russ) und 6 g ®Irgaspers Schwarz RU werden zugegeben und mit einem Rührer vermischt.Die so erhaltene Dispersion wird wie im obigen Beispiel 4b) klar filtriert; gemessene Viskosität wie im Bspl. 4b).

**Patentansprüche**

1. Wässrige Drucktinte für den Tintenstrahldruck enthaltend
   a) 0,5 bis 5 Gew.-% eines festen Pigmentpräparates enthaltend 30 bis 70 Gew.-% eines Pigmentes und 70 bis 30 Gew.-% eines carbonsäuregruppenhaltigen Polyacrylharzes mit einer Säurezahl zwischen 50 und 300 und einem Durchschnittsmolekulargewicht Mw zwischen 30'000 und 60'000,
   b) 2 bis 10 Gew.-% eines wasserverdünnbaren organischen Lösungsmittels ausgewählt aus der Gruppe der $C_1$-$C_4$-Alkohole, alipha-tische Ketone, Polyole Cellosolve, Carbitole, N-Methyl-2-pyrrolidon, 2-Pyrrolidon, N,N-Dimethylformamid, N,N-Dimethylacetamid und deren Gemische,
   c) 2 bis 15 Gew.-% eines Trockungsverzögerers ausgewählt aus der Gruppe Ethylenglykol, Diethylenglykol, Triethylenglykol, Tetraethylenglykol, Propylenglykol, Dipropylenglykol, Glycerin unde insbesondere Polyethylenglykole, und
   d) Wasser,
   wobei die wässrige Drucktinte eine Viskosität zwischen 2 und 5 mPas aufweist.

2. Wässrige Drucktinte gemäss Anspruch 1, wobei das Polyacrylharz im wesentlichen aus drei Bauelementen Ethylacrylat, Methylmethacrylat und Acrylsäure oder Methacrylsäure besteht.

3. Wässrige Drucktinte gemäss Anspruch 1, wobei die Säurezahl zwischen 60 und 120 liegt.

4. Wässrige Drucktinte gemäss Anspruch 1, wobei das Pigmentpräparatein Russpräparat oder ein Präparat mit einem organischen Pigment ist.

5. Wässrige Drucktinte gemäss Anspruch 1, wobei feste, in Knetmaschinen hergestellte Pigmentpräparate verwendet werden.

6.  Wässrige Drucktinte gemäss Anspruch 1, wobei als Komponente b) Isopropanol oder N-Methyl-2-pyrrolidon verwendet wird.

7.  Wässrige Drucktinte gemäss Anspruch 1, wobei als Trocknungsverzögerer Polyethylenglykol mit einem Molekulargewicht zwischen 200 und 800 verwendet wird.

8.  Wässrige Drucktinte gemäss Anspruch 1, wobei zusätzlich noch Ammoniak und/oder Aminomethylpropanol mitverwendet werden/wird.

9.  Wässrige Drucktinte gemäss Anspruch 1, wobei zur Einstellung der Viskosität und/oder der Oberflächenspannung und der Leitfähigkeit der Tinte zusätzlich noch Zusätze bzw. geeignete Mittel mitverwendet werden.

10. Wässrige Drucktinte gemäss Anspruch 1, wobei kleine Anteile organischer Farbstoffe mitverwendet werden.

11. Wässrige Drucktinte gemäss Anspruch 1, wobei der Grobanteil der Tinte vor Gebrauch mit einem Filter oder einer Kombination von Filtern entfernt wird.

**Claims**

1.  An aqueous printing ink for ink jet printing which comprises
    a) 0.5 to 5% by weight of a solid pigment preparation containing 30 to 70% by weight of a pigment and 70 to 30% by weight of a polyacrylic resin which contains carboxyl groups and has an acid value of between 50 and 300 and an average molecular weight $M_w$ of between 30 000 and 60 000,
    b) 2 to 10% by weight of a water-dilutable organic solvent, selected from the group consisting of $C_1$-$C_4$ alcohols, aliphatic ketones, polyols, Cellosolves, carbitols, N-methyl-2-pyrrolidone, 2-pyrrolidone, N,N-dimethylformamide, N,N-dimethylacetamide and mixtures thereof,
    c) 2 to 15% by weight of a drying retarder selected from the group consisting of ethylene glycol, diethylene glycol, triethylene glycol, tetraethylene glycol, propylene glycol, dipropylene glycol, glycerol and, in particular, polyethylene glycols, and
    d) water.

2.  An aqueous printing ink according to claim 1, wherein the polyacrylic resin consists essentially of the three structural elements ethyl acrylate, methyl methacrylate and acrylic acid or methacrylic acid.

3.  An aqueous printing ink according to claim 1, wherein the acid value is between 60 and 120.

4.  An aqueous printing ink according to claim 1, wherein the pigment preparation is a carbon black preparation or a preparation containing an organic pigment.

5.  An aqueous printing ink according to claim 1, wherein a solid pigment preparation which is prepared in a kneader is used.

6.  An aqueous printing ink according to claim 1, wherein component b) is isopropanol or N-methyl-2-pyrrolidone.

7.  An aqueous printing ink according to claim 1, wherein the drying retarder used is polyethylene glycol having a molecular weight of between 200 and 800.

8.  An aqueous printing ink according to claim 1, which additionally contains ammonia and/or aminomethylpropanol.

9.  An aqueous printing ink according to claim 1, which additionally contains additives and/or suitable agents for regulating the viscosity and/or the surface tension and the conductivity of the ink.

10. An aqueous printing ink according to claim 1, which additionally contains a minor amount of organic dye.

11. An aqueous printing ink according to claim 1, from which the coarse particles are removed before use by means of a filter or of a combination of filters.

**Revendications**

1.  Encre d'imprimerie aqueuse pour impression par jet d'encre contenant :
    a) de 0,5 à 5 % en poids d'une préparation de pigment solide contenant de 30 à 70 % en poids d'un pigment et de 70 à 30 % en poids d'une résine polyacrylique contenant des groupes acide carboxylique ayant un indice d'acide compris entre 50 et 300 et un poids moléculaire moyen $M_w$ compris entre 30 000 et 60 000,
    b) de 2 à 10 % en poids d'un solvant organique pouvant être dilué dans l'eau choisi parmi le groupe des alcools en $C_1$-$C_4$, des cétones aliphatiques, des polyols, du Cellosolve, du Carbitole, de la N-méthyl-2-pyrrolidone, de la 2-pyrrolidone, du N,N-diméthylformamide, du N,N-diméthylacétamide et de leurs mélanges,

c) de 2 à 15 % en poids d'un retardateur de séchage choisi parmi le groupe de l'éthylène-glycol, du diéthylène-glycol, du triéthylène-glycol, du tétraéthylène-glycol, du propylène-glycol, du dipropylène-glycol, du glycérol et en particulier des polyéthylène-glycols, et

d) de l'eau,

l'encre d'imprimerie aqueuse ayant une viscosité comprise entre 2 et 5 mPas.

2. Encre d'imprimerie aqueuse selon la revendication 1, la résine polyacrylique étant formée essentiellement des trois éléments de construction suivants : acrylate d'éthyle, méthacrylate de méthyle et acide acrylique ou acide méthacrylique.

3. Encre d'imprimerie aqueuse selon la revendication 1, l'indice d'acide se situant entre 60 et 120.

4. Encre d'imprimerie aqueuse selon la revendication 1, la préparation de pigment étant une préparation de noir de fumée ou une préparation avec un pigment organique.

5. Encre d'imprimerie aqueuse selon la revendication 1, des préparations de pigments solides préparées dans un malaxeur étant utilisées.

6. Encre d'imprimerie aqueuse selon la revendication 1, l'isopropanol ou la N-méthyl-2-pyrrolidone étant utilisés en tant que composant b).

7. Encre d'imprimerie aqueuse selon la revendication 1, le polyéthylène-glycol ayant un poids moléculaire compris entre 200 et 800 étant utilisé en tant que retardateur de séchage.

8. Encre d'imprimerie aqueuse selon la revendication 1, en utilisant simultanément, de plus, l'ammoniaque et/ou l'aminométhylpropanol.

9. Encre d'imprimerie aqueuse selon la revendication 1, en utilisant simultanément, de plus, des additifs ou bien des agents appropriés afin d'établir la viscosité et/ou la tension superficielle et la conductibilité de l'encre.

10. Encre d'imprimerie aqueuse selon la revendication 1, en utilisant simultanément une faible quantité de colorant organique.

11. Encre d'imprimerie aqueuse selon la revendication 1, la partie grossière de l'encre étant éliminée, avant l'utilisation, avec un filtre ou une combinaison de filtres.